# EUROPEAN PATENT APPLICATION

(11) **EP 0 737 832 A1**
(43) Date of publication of application: **16.10.1996**
(21) Application number: 96302361.9
(22) Date of filing: 03.04.1996
(51) Int. Cl.: F16L 37/084, B25B 27/10

(54) **Tool for releasable push-fit pipe couplings**

(30) Priority: 11.04.1995 GB 9507466
(71) Applicant: IMI YORKSHIRE FITTINGS LIMITED, Leeds, LS1 1RD (GB)
(72) Inventor: Teal, Dennis, Rothwell, Leeds, LS26 OPW (GB)
(74) Representative: Lane, Michael John

(57) **Abstract**

A tool for facilitating release of a releasable push-fit pipe coupling comprises tongs having a pair of rigid arms (15,16) joined together at their respective one ends by a springy portion (17) and having, at their other ends, respective bifurcated portions (15',16') for engaging, respectively, a shoulder (18) formed on the coupling body (1) and the outer end of a release sleeve (11).

Squeezing of the tongs applies a laterally balanced depressive force to the release sleeve (11) which resiliently deforms pipe-gripping teeth (9') out of engagement with the pipe 14, which can then be withdrawn.

## Description

This invention relates to releasable push-fit pipe couplings and more particularly to a novel method and tool for facilitating release and withdrawal of a pipe from such a coupling.

Releasable push-fit pipe couplings including a collet or grab-ring having teeth that grip a pipe connected thereto are well known. In such couplings, if the pipe is accidentally pulled or the fluid pressure therein becomes excessive, the grip of the teeth on the pipe tends to increase and withdrawal or blow-out of it is prevented. However, withdrawal is made possible, when desired, by the provision of a release sleeve that surrounds the pipe and protrudes from the coupling body. More particularly, when the release sleeve (which in the collet type of coupling may be formed integrally with the collet) is depressed axially, the teeth are caused to release their grip on the pipe, which can then simply be withdrawn from the coupling. In some known designs, a radially extending flange is provided on the outer end of the release sleeve in order to facilitate manual depression of the sleeve but this detracts from tamper-proofness. In other, relatively tamper-proof, designs, where the sleeve does not have such a flange, the use of a screwdriver or the like is recommended to depress the release sleeve, but this is not always satisfactory. Thus, especially in the case of larger diameter pipe fittings, the use of a screwdriver may tend to tilt the release sleeve whereby some of the teeth may not release their grip on the pipe. Also, where the release sleeve is made of a plastics material a screwdriver will tend to damage its protruding end.

It is an object of the present invention to provide an improved method of depressing the release sleeve of a releasable push-in pipe coupling and a tool for use therein. The method and tool have application to substantially any type of releasable push-fit tube coupling having a release sleeve as aforesaid, but are especially useful in relation to the relatively tamper-proof couplings referred to above.

According to one aspect of the present invention, therefore, there is provided a tool for facilitating release of a releasable push-fit pipe coupling of the type having a depressible release sleeve protruding from an end of the coupling body, so that a pipe coupled thereto may be withdrawn whilst the release sleeve is in a depressed position, the tool being generally in the form of tongs, the free ends of both arms of which are bifurcated for location, respectively, partly around the coupling body substantially in abutting relationship with one or more abutment surfaces, for example defined by an annular shoulder, located externally of the body preferably adjacent to said end thereof, and partly around the pipe substantially in abutting relationship with the outer end of the release sleeve.

In another aspect, the invention provides a method of releasing a releasable push-fit pipe coupling of the aforesaid type so that a pipe coupled thereto may then be withdrawn, the method comprising taking a tool as defined above, locating its bifurcated ends in the manner specified above, and manually actuating the tongs so as axially to depress the release sleeve.

The invention will now be described in more detail, by way of example only, with reference to the accompanying drawings in which:
Fig 1 is a sectional side elevation of a releasable grab-ring type of push-fit straight coupling for joining together two pipes;
Fig 2 is a plan view, on a smaller scale than Fig 1, of a release tool constructed in accordance with the invention; and
Fig 3 is a side elevation on the line III - III of Fig 2 showing the tool in its operative position in relation to the coupling of Fig 1.

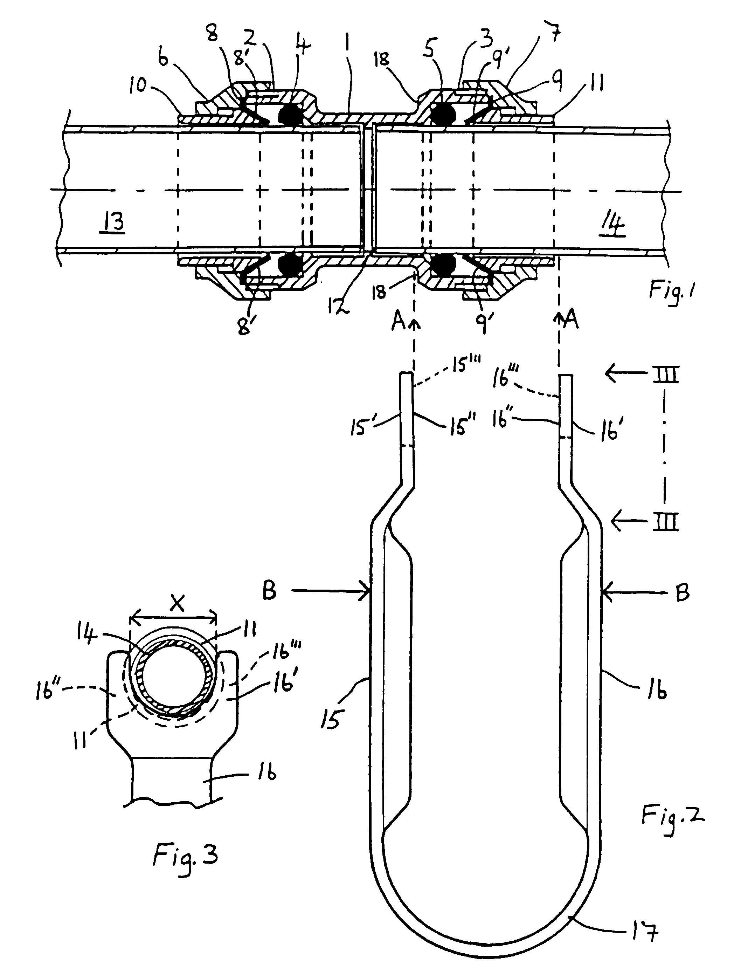

Referring firstly to Fig 1, the straight coupling depicted comprises generally known features, namely a body 1 externally screw-threaded at both ends 2, 3, a pair of O-ring seals 4, 5, seated against respective shoulders formed internally of the body 1, a pair of internally threaded nuts 6, 7, a pair of grab-rings 8, 9, and a pair of release sleeves 10, 11.

The nuts 6 and 7 engage, respectively, the threaded ends 2 and 3 of the body 1 and serve to clamp the respective peripheries of the grab-rings 8 and 9 each of which has a plurality of teeth, four of which are shown at 8' and 9', integrally formed therewith. The nuts 6 and 7 also retain, as a sliding fit, the release sleeves 10 and 11 respectively. As can be seen, the body 1 is formed integrally with an internal annular flange 12 that serves as a pipe stop. By way of example, the body 1 and nuts 6 and 7 may be made of brass, the grab-rings 8 and 9 of steel and the sleeves 10 and 11 of a hard plastics material.

In Fig 1, the straight coupling is shown as coupling together two rigid pipes 13, 14, for example of copper, although it is equally suitable for joining together semi-rigid or flexible pipes/tubes of, for example, plastics material. More particularly, the pipes 13 and 14 are connected to the coupling simply by pushing them into the respective ends of the coupling, through the release sleeves 10 and 11, until their ends abut the pipe stop 12. During that operation, the teeth 8' and 9' etc are resiliently displaced slightly outwardly, whilst maintaining firm contact with the pipes, and a fluid-tight seal is formed between the pipes 13 and 14 and the O-rings 4 and 5 respectively.

If, now, the pipes 13 or 14 are pulled, or the fluid pressure in them becomes excessive thus tending to force them out of the coupling, the teeth 8', 9' etc cantilever towards the axis of the body 1 and bite into the outer surfaces of the pipes thus preventing withdrawal or blow-out of them. However, when it is desired to de-couple a pipe, the sleeve 10 or 11, as appropriate, is first axially depressed by the user whereupon the teeth 8' or 9' etc are resiliently displaced out of contact with the pipe by co-action of the inner, tapered end of the release sleeve with the teeth 8' or 9' etc, and, whilst the sleeve is still depressed, the pipe can then be pulled out.

In accordance with the invention, depression of the release sleeves 10 and 11 is effected using, for example, the tool shown in Figs 2 and 3. The release operation will be described with reference to decoupling of the pipe 14, although of course the pipe 13 would be decoupled in an analagous manner.

Referring additionally to those Figures, it can be seen that the tool is basically in the form of tongs having a pair of substantially rigid arms 15 and 16 joined at one end by an integral, springy portion 17. The free ends 15', 16' of the arms are each bifurcated to provide a pair of mutually parallel prongs having mutually coplanar, flat internal surfaces 15", 15"' and 16", 16"'. The pairs of prongs define between them respective U-shaped slots (see Fig 3) so that, upon locating the tongs as indicated by arrows A, the end 15' of the arm 15 fits partially around the coupling body 1 and the end 16' of the arm 16 fits partially around the pipe 14. The respective widths of the U-shaped slots are such that, after the tongs have been located thus, when the arms 15 and 16 of the tongs are manually slightly squeezed together, as depicted by the arrows B in Fig 2, the flat internal surfaces 15", 15"' ofthe prongs at the end 15' engage part of an annular shoulder 18 formed externally on the coupling body 1, whilst the flat internal surfaces 16", 16"' of the prongs at the end 16' engage the outer annular end of the release sleeve 11. Further squeezing of the tongs therefore applies a laterally balanced axial force to, in particular, diametrically opposed regions of the annular end of the sleeve 11, and depresses it, without tilting or damaging it, whereby the teeth 9' etc are displaced out of contact with the pipe 14, as described above.

As will be appreciated, the U-shaped slot width of the bifurcated end 16' (dimension X in Fig 3) is selected in dependence upon the outside diameter of the protruding end of the release sleeve 11 and will be less than that diameter but greater, and preferably only marginally greater, than the outside diameter of the pipe 14. Usually, but not necessarily (depending on the relative external diameters of the body 1 and the release sleeve 11), the dimension corresponding to X of the bifurcated end 15' that fits partially, and preferably snugly, around the body 1 adjacent to the shoulder 18 will be larger than X because the external diameter of the body 1 adjacent to the shoulder 18 will usually be larger than the external diameter of the protruding end of the release sleeve 11. Equally, the depth of the bifurcations will usually differ so that the tool may be located squarely on, ie substantially perpendicularly to the axis of, the body 1 and pipe 14 and thus apply a laterally balanced axial force to the release sleeve 11, as mentioned above. In other words, in a given tongs, the width and depth of the bifurcations will usually differ as between the ends 15' and 16'. Also, of course, different tongs having appropriately dimensioned bifurcations will be required for different sizes of coupling.

Whilst the slot defined by each bifurcation is shown in the drawings to have a curved base for snugly engaging, respectively, the coupling body 1 and the pipe 14, the base could be straight, ie. the slot could be of substantially rectangular form.

The tongs, which may alternatively be of the scissor-action type, may be made of any suitable material, but for economy and strength the ones depicted are preferably fabricated as a one-piece mild steel pressing.

The invention therefore provides a very simple but effective method and tool for releasing push-fit couplings of the general type in question especially where they are intended to be relatively tamper-proof, that is to say relatively difficult or impossible to release manually without the use of, as hitherto recommended, a screwdriver.

Of course, the invention is applicable to any configuration of coupling, for example a straight, T- or elbow coupling for joining together two or more pipes, as the case may be, or to a fitting such as, for example, a tap, stop cock or valve including one or more releasable push-fit couplings for connecting one or more pipes thereto.

## Claims

1. A tool for facilitating release of a releasable push-fit pipe coupling of the type having a depressible release sleeve (11) protruding from an end of the coupling body (1), so that a pipe (13, 14) coupled thereto may be withdrawn whilst the release sleeve (11) is in a depressed position, characterised in that the tool is generally in the form of tongs, the free ends (15', 16') of both arms (15, 16) of which are bifurcated for location, respectively, partly around the coupling body (1) substantially in abutting relationship with one or more abutment surfaces (18) located externally of the body (1) and partly around the pipe (13, 14) in substantially abutting relationship with the outer end of the release sleeve (11).

2. A tool according to claim I wherein the bifurcated free end (15', 16') of each arm (15, 16) defines a pair of prongs having mutually coplanar internal flat surfaces (16", 16"') for engaging one or other of the said abutment surface(s) (18) and the outer end of the release sleeve (11).

3. A tool according to claim 1 or claim 2 wherein the bifurcated free ends (15', 16') of the arms (15, 16) define respective U-shaped slots for receiving, respectively, at least part of the body (1) and of the pipe (13, 14).

4. A tool according to any one of claims 1 to 3 wherein the arms (15, 16) extend in substantially parallel spaced relationship and are joined together at the respective ends thereof remote from their free, bifurcated ends (15', 16') by a preferably U-shaped, springy portion (17).

5. A tool according to claim 4 which is in the form of a one-piece metal, for example steel, pressing.

6. A tool according to any one of claims 1 to 3 wherein the tongs are of a scissor-action type.

7. A method of releasing a releasable push-fit pipe coupling of the type having a depressible release sleeve (11) protruding from an end of the coupling body (1), so that a pipe (13, 14) coupled thereto may be withdrawn whilst the release sleeve (11) is in a depressed position,
characterised in that the method comprises taking a tool as claimed in any one of claims 1 to 6, locating the bifurcated ends (15', 16') of the arms (15, 16) respectively partly around the coupling body (1) adjacent to one or more abutment surfaces (18) located externally thereof and partly around the pipe (13, 14) adjacent to the outer end of the release sleeve (11), and manually actuating the tongs so as to bring the free ends (15', 16') of said arms (15, 16) closer to one another in order to axially depress the release sleeve (11).
